(19) **Europäisches Patentamt / European Patent Office / Office européen des brevets**

(11) **EP 3 782 877 A1**

(12) **EUROPEAN PATENT APPLICATION**

(43) Date of publication:
**24.02.2021 Bulletin 2021/08**

(51) Int Cl.:
**B62D 6/00** *(2006.01)*    **B62D 15/02** *(2006.01)*

(21) Application number: **20190920.7**

(22) Date of filing: **13.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2019   JP 2019150397**

(71) Applicant: **JTEKT CORPORATION**
**Chuo-ku,**
**Osaka-shi,**
**Osaka 542-8502 (JP)**

(72) Inventors:
• **MIURA, Yuichi**
  **Osaka-shi,, Osaka 542-8502 (JP)**
• **KOJIMA, Takashi**
  **Osaka-shi,, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Straße 22**
**85354 Freising (DE)**

(54)    **CONTROL DEVICE AND STEERING DEVICE**

(57)    A control device configured includes an electronic control unit (140) configured to i) determine a right steering command value and a left steering command value, based on a steering command value indicating a steering direction of a vehicle, ii) acquire path information, iii) correct the steering command value based on at least one of state amounts indicating a behavior of the vehicle during travel such that the vehicle travels along a target path, and iv) correct each of the right steering command value and the left steering command value based on lateral force information indicating a tire lateral force of at least one of a plurality of wheels including a right steered wheel (120) and a left steered wheel (110) such that a distribution ratio between a tire lateral force of the right steered wheel (120) and a tire lateral force of the left steered wheel (110) matches a target distribution ratio.

FIG. 2

**Description**

BACKGROUND OF THE INVENTION

1. Field of the Invention

The present invention relates to a control device that independently steers steered wheels disposed on the right and left sides, and to a steering device.

2. Description of Related Art

In some steering devices for vehicles, a steering wheel and a steering operation mechanism are not mechanically connected to each other, and the steered angles of steered wheels are controlled independently. For example, Japanese Unexamined Patent Application Publication No. 2009-208492 (JP 2009-208492 A) describes a technique of turning a vehicle as intended by a driver in a stable posture by controlling the drive forces and the steered angles of steered wheels in the case where steering by the driver exceeds a limit. Meanwhile, Japanese Unexamined Patent Application Publication No. 2009-234306 (JP 2009-234306 A) describes a technique of setting target toe angles for rear wheels such that the resultant force of a tire lateral force and a drive force falls within a tire friction circle set for each of the right and left rear wheels, based on the lateral acceleration of the vehicle and the drive forces of the rear wheels.

SUMMARY OF THE INVENTION

The turning limit of a vehicle is defined as the maximum yaw rate, or the minimum turning radius, at which the vehicle can travel at a set vehicle speed in a steady state without spinning. In this case, vehicles with a low turning limit cannot immediately change its course during emergency steering, and safe travel may not be secured.
The present invention provides a control device and a steering device that improve the turning limit of a vehicle by individually determining the respective steered angles of right and left steered wheels of the vehicle such that the vehicle follows a target path and individually correcting the respective steered angles of the right and left steered wheels.
A first aspect of the present invention relates to a control device configured to independently control respective steered angles of a right steered wheel and a left steered wheel disposed on right and left sides with respect to an advancing direction of a vehicle. The control device includes an electronic control unit configured to i) determine a right steering command value that indicates the steered angle of the right steered wheel, and a left steering command value that indicates the steered angle of the left steered wheel, based on a steering command value that indicates a steering direction of the vehicle, ii) acquire path information that indicates a target path for the vehicle, iii) correct the steering command value based on at least one of a plurality of state amounts indicating a behavior of the vehicle during travel such that the vehicle travels along the target path, and iv) correct each of the right steering command value and the left steering command value based on lateral force information that indicates a tire lateral force of at least one of a plurality of wheels including the right steered wheel and the left steered wheel such that a distribution ratio between a tire lateral force of the right steered wheel and a tire lateral force of the left steered wheel matches a target distribution ratio.
A second aspect of the present invention relates to a steering device including the control device according to the first aspect of the invention; a left steering operation mechanism including a left actuator that steers the left steered wheel; and a right steering operation mechanism including a right actuator that steers the right steered wheel.
According to the above aspects of the present invention, it is possible to improve the turning limit of the vehicle by steering the vehicle such that the vehicle follows a target path and individually correcting the respective steered angles of the right and left steered wheels with a predetermined ratio.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

    FIG. 1 illustrates the overall configuration of a steering device according to an embodiment;
    FIG. 2 is a block diagram illustrating the functional configuration of a control device according to the embodiment together with components of a vehicle;
    FIG. 3 is a block diagram illustrating the functional configuration of a lateral force generation unit;
    FIG. 4 is a block diagram illustrating the functional configuration of a control device according to a first modification example together with components of a vehicle; and
    FIG. 5 is a block diagram illustrating the functional configuration of a control device according to a second modification example together with components of a vehicle.

## DETAILED DESCRIPTION OF EMBODIMENTS

A control device and a steering device according to an embodiment of the present invention will be described below with reference to the drawings. The numerical values, shapes, materials, constituent elements, positional relationship among the constituent elements, state of connection, steps, order of the steps, etc. are exemplary, and are not intended to limit the present invention. In the embodiment, constituent elements that are not described in a claim are described as optional for the invention according to the claim. The drawings are schematic diagrams that include exaggeration, omission, and scale adjustment, as appropriate, in order to illustrate the present invention, and may be different from the actual shapes, positional relationship, or scale.

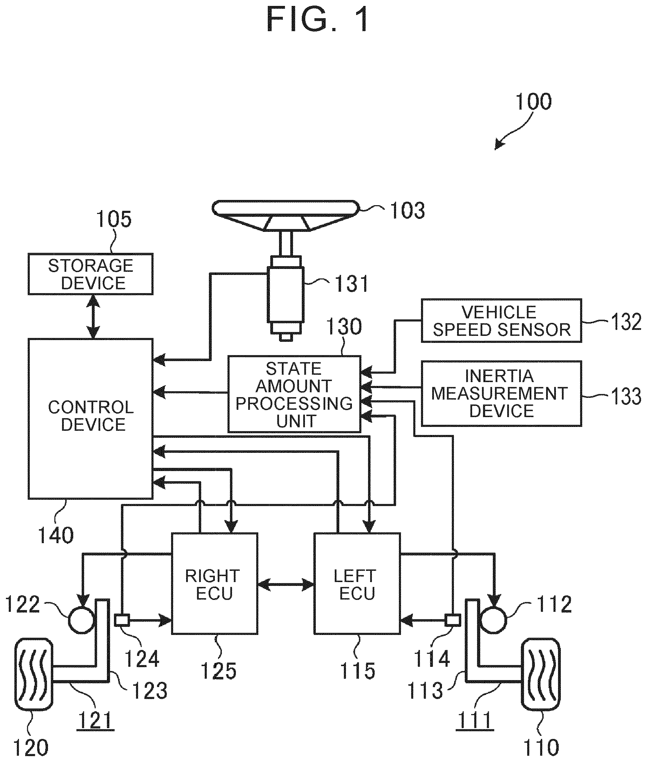

First, the overall configuration of a steering device 100 for a vehicle 101 according to the embodiment of the present invention will be described. FIG. 1 is a block diagram illustrating the overall configuration of a steering device according to the embodiment. In the steering device 100, a right steered wheel 120 and a left steered wheel 110 mounted on the vehicle 101 such as a passenger car are not coupled to each other by a mechanical element such as a link, and the right steered wheel 120 and the left steered wheel 110 can be steered independently. In the case of the present embodiment, the steering device 100 constitutes a linkless steer-by-wire system in which the right and left steered wheels can be steered based on a signal output by steering a steering member 103. The steering device 100 includes: the steering member 103 which is operated by a driver for steering; the right steered wheel 120 and the left steered wheel 110 which are disposed on the front side of the vehicle 101 in the travel direction; a right steering operation mechanism 121 that individually steers the right steered wheel 120; and a left steering operation mechanism 111 that individually steers the left steered wheel 110.

The right steering operation mechanism 121 and the left steering operation mechanism 111 include a right actuator 122 and a left actuator 112, respectively, that are controlled in accordance with an operation of rotating the steering member 103. In the case of the present embodiment, the right actuator 122 and the left actuator 112 are each an electric motor.

The right steering operation mechanism 121 and the left steering operation mechanism 111 include a right steering operation structure 123 and a left steering operation structure 113 that steer the right steered wheel 120 and the left steered wheel 110, respectively. The right steering operation structure 123 and the left steering operation structure 113 are supported on the vehicle body by a suspension. The left steering operation structure 113 steers the left steered wheel 110 using a rotational drive force received from the left actuator 112. The right steering operation structure 123 steers the right steered wheel 120 using a rotational drive force received from the right actuator 122.

The steering device 100 further includes a steering angle sensor 131 that detects the steering angle of the steering member 103. The steering angle sensor 131 detects the rotational angle and the angular speed of a rotary shaft of the steering member 103, and outputs the detected value as a steering command value. The steering device 100 also includes a right sensor 124 that detects the steered angle of the right steered wheel 120, and a left sensor 114 that detects the steered angle of the left steered wheel 110.

The vehicle 101 is provided with a vehicle speed sensor 132 that detects a speed V of the vehicle 101, and an inertia measurement device 133. The inertia measurement device 133 includes a gyro sensor, an acceleration sensor, a geomagnetic sensor, etc., for example. The inertia measurement device 133 detects the acceleration and the angular speed of the vehicle 101 in three-axis directions, etc. Examples of the three-axis directions of the angular speed include yawing, pitching, and rolling directions. The inertia measurement device 133 detects the angular speed in the yawing direction (hereinafter referred to as "yaw rate"), for example. The inertia measurement device 133 may further detect the angular speed in the pitching and rolling directions.

The vehicle speed sensor 132, the inertia measurement device 133, etc. are connected to a state amount processing unit 130. The state amount processing unit 130 outputs information from the various sensors to a control device 140 as state amounts. The state amount processing unit 130 may generate state amounts that indicate the behavior of the vehicle 101 by performing computation on the information from the various sensors, and may output the state amounts to the control device 140.

The steering device 100 also includes the control device 140 and a storage device 105. The storage device 105 may be disposed separately from the control device 140 and electrically connected to the control device 140, or may be included in the control device 140. The left steering operation mechanism 111 includes a left electronic control unit (ECU) 115. The right steering operation mechanism 121 includes a right ECU 125. The control device 140 is electrically connected to the right ECU 125, the left ECU 115, the steering angle sensor 131, the vehicle speed sensor 132, and the inertia measurement device 133. The left ECU 115 is electrically connected to the control device 140, the left sensor 114, the left actuator 112, and the right ECU 125. The right ECU 125 is electrically connected to the control device 140, the right sensor 124, the right actuator 122, and the left ECU 115. Communication among the control device 140, the right ECU 125, the left ECU 115, the right actuator 122, the left actuator 112, the state amount processing unit 130, and the various sensors may be performed via an in-vehicle network such as a controller area network (CAN).

The control device 140 performs feedback control based on information etc. acquired from the steering angle sensor 131, the vehicle speed sensor 132, the inertia measurement device 133, the right ECU 125, and the left ECU 115, and outputs appropriate right steering command value and left steering command value to the right ECU 125 and the left ECU 115, respectively. The control device 140 will be discussed in detail later.

The storage device 105 can store various information, and can take out and output the stored information. The storage device 105 is implemented by a storage device such as a read only memory (ROM), a random access memory (RAM), a semiconductor memory such as a flash memory, a hard disk drive, or a solid state drive (SSD).

Next, the control device 140 will be discussed in detail. The control device 140, the right ECU 125, and the left ECU 115 may each include a microcomputer that includes a processor such as a central processing unit (CPU) or a digital signal processor (DSP) and a memory. That is, the control device 140, the right ECU 125, and the left ECU 115 may each be an ECU. The memory may be a volatile memory such as a RAM or a non-volatile memory such as a ROM, or may be the storage device 105. All or some of the functions of the control device 140, the state amount processing unit 130, the right ECU 125, and the left ECU 115 may be achieved by the CPU executing a program stored in the ROM using the RAM as a work memory.

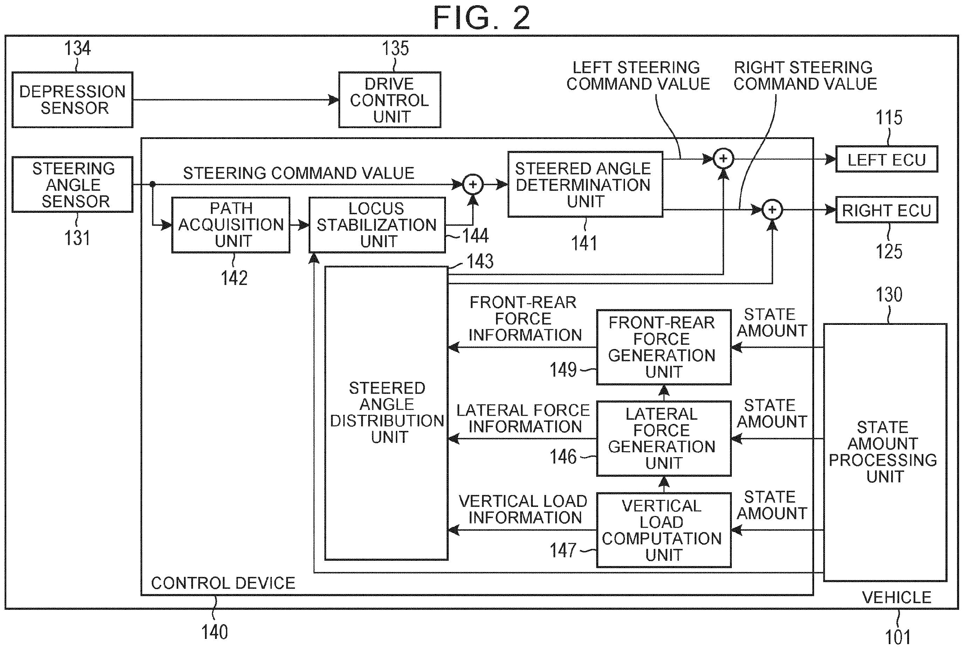

FIG. 2 is a block diagram illustrating the functional configuration of the control device 140. The control device 140 is a device that independently controls the respective steered angles of the right steered wheel 120 and the left steered wheel 110 which are disposed on the right and left sides with respect to the advancing direction of the vehicle 101. The control device 140 includes a steered angle determination unit 141, a path acquisition unit 142, a steered angle distribution unit 143, and a locus stabilization unit 144. In the case of the present embodiment, the control device 140 includes a lateral force generation unit 146, a vertical load computation unit 147, and a front-rear force generation unit 149. The control on the vehicle speed of the vehicle 101 is executed by a drive control unit 135 controlling an engine, a motor, etc. based on information from a depression sensor 134 attached to an accelerator pedal etc. to detect the amount of depression of the pedal.

The steered angle determination unit 141 determines a right steering command value that indicates the steered angle of the right steered wheel 120, and a left steering command value that indicates the steered angle of the left steered wheel 110, based on a steering command value that indicates the steering direction of the vehicle 101. In the case of the present embodiment, the steered angle determination unit 141 acquires the rotational angle of the rotary shaft of the steering member 103 from the steering angle sensor 131 as a steering command value, performs computation based on a so-called overall steering gear ratio that is a predetermined ratio, and an inner wheel steered angle and an outer wheel steered angle based on the Ackermann-Jeantaud theory, and outputs the right steering command value and the left steering command value.

The left ECU 115 steers the left steered wheel 110 by driving the left actuator 112 in accordance with the acquired left steering command value. The right ECU 125 steers the right steered wheel 120 by driving the right actuator 122 in accordance with the acquired right steering command value.

The path acquisition unit 142 acquires path information that indicates a target path for the vehicle 101. In the case of the present embodiment, the vehicle 101 is steered based on only an operation of the steering member 103 by the driver, and therefore the path acquisition unit 142 acquires information from the steering angle sensor 131 as path information. The path acquisition unit 142 may generate path information by performing computation based on information from the steering angle sensor 131 such as the rotational angle and the angular speed of the steering member 103, for example. This generation of path information is also included in the acquisition of path information. Further, path information may be acquired in addition to the vehicle speed.

The locus stabilization unit 144 corrects the steering command value based on at least one of a plurality of state amounts indicating the behavior of the vehicle 101 during travel such that the vehicle 101 travels along the target path which is acquired by the path acquisition unit 142. When the right and left steering command values are corrected by the steered angle distribution unit 143, the steered angles of the right and left steered wheels are individually varied. The total sum of generated tire lateral forces is varied based on such variations, and the travel locus (turning locus) of the vehicle 101 through a curve is fluctuated. Therefore, the locus stabilization unit 144 corrects the steering command value. For example, the locus stabilization unit 144 derives a target yaw rate from the target path and the state amounts which are obtained from the state amount processing unit 130, and corrects the steering command value so as to maintain the target yaw rate. In addition, the locus stabilization unit 144 derives a target curvature (the reciprocal of a turning radius) during a turn from the target path and the state amounts, and corrects the steering command value so as to maintain the target curvature.

The steered angle distribution unit 143 optimizes the behavior of the vehicle by acquiring lateral force information that indicates respective tire lateral forces of the right steered wheel 120 and the left steered wheel 110, as a state amount that indicates the behavior of the vehicle 101 during travel and correcting the right steering command value and the left steering command value based on the acquired lateral force information such that the distribution ratio between the lateral force of the right steered wheel 120 and the lateral force of the left steered wheel 110 matches a target distribution ratio.

The method of determining the target distribution ratio adopted by the steered angle distribution unit 143 is not specifically limited. The target distribution ratio may be determined from a value set in advance based on experiments, simulations, etc. For example, the target distribution ratio during a turn of the vehicle 101 may be determined such that the amount of the lateral force allocated (i.e., distributed) to the outer wheel side is larger than the amount of the lateral force allocated (i.e., distributed) to the inner wheel side. When a load shift is caused by a centrifugal force due to a turn, the friction circle of the outer wheel becomes larger than that of the inner wheel, and a larger tire lateral force is generated in the outer wheel. Therefore, the turning limit can be enhanced by increasing the amount of the lateral force allocated (i.e., distributed) to the outer wheel side as compared to the amount of the lateral force allocated (i.e., distributed) to the inner wheel side.

In the case of the present embodiment, the steered angle distribution unit 143 acquires a state amount that indicates the behavior of the vehicle 101, and determines a target distribution ratio such that the friction circle use rate which is indicated by the following formula 1 is less than one. The highest one of the friction circle use rates of a plurality of wheels including the steered wheels may be adopted as the friction circle use rate. The turning limit is reached when the friction circle of at least one of the wheels is used up, even when the friction circles of the other wheels are not fully used. Therefore, the turning limit can be improved by reducing the friction circle use rate by setting a target distribution ratio such that the tire lateral force and the tire front-rear force of the wheel with the highest friction circle use rate are allocated to a wheel of which the friction circle is not fully used.

The friction circle use rate of the drive wheel on the inner side among the wheels including the steered wheels may be adopted as the friction circle use rate. When a load shift is caused by a centrifugal force due to a turn, the friction circle of the inner wheel becomes smaller than that of the outer wheel. When the turning radius becomes smaller, the tire front-rear force related to the drive force needed to maintain the vehicle speed is increased by an increase in the travel resistance due to a turn. The tire front-rear force due to drive contributes more to the friction circle use rate than the tire lateral force due to steering. Hence, the friction circle use rate of the inner drive wheel is the highest among the friction circle use rates of the wheels. The friction circle use rate is represented as follows.

$$\text{Friction circle use rate} = ((\text{tire front-rear force})^2 + (\text{tire lateral force})^2)/\text{vertical load}^2 \cdots \text{Formula 1}$$

A symbol of "^" represents exponentiation, and (tire front-rear force)^2 + (tire lateral force)^2 is represented by a function that includes the distribution ratio as a variable. For example, the steered angle distribution unit 143 may determine a target distribution ratio within a predetermined range including a distribution ratio at which the value of the function is a local minimum.

At least one of the tire front-rear force, the tire lateral force, and the vertical load may be acquired directly based on a sensor mounted on the vehicle 101. Alternatively, at least one of the tire front-rear force, the tire lateral force, and the vertical load may be acquired indirectly through computation from a state amount acquired from the state amount processing unit 130. The tire front-rear force and the tire lateral force can be calculated based on an equation of motion of the vehicle in the rotational direction, an equation of motion of the vehicle in the front-rear direction, an equation of motion of the vehicle in the lateral direction, a formula of a tire model, a relational expression between the steered angle and the tire lateral force, a relational expression between the steered angle and the tire front-rear force, etc.

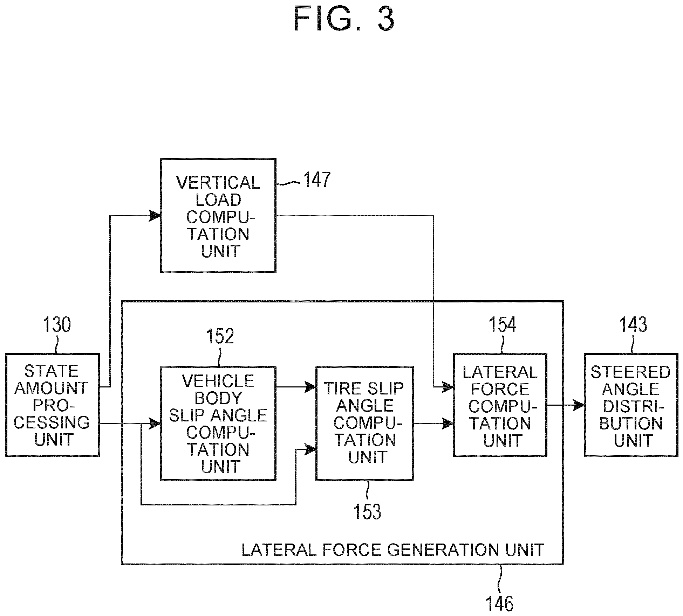

In the case of the present embodiment, the steered angle distribution unit 143 calculates the respective friction circle use rates of the wheels from the vertical loads on the wheels which are computed by the vertical load computation unit 147, the lateral forces of the wheels which are generated by the lateral force generation unit 146, and the front-rear forces of the wheels which are generated by the front-rear force generation unit 149, determines the target distribution ratio between the lateral force of the right steered wheel 120 and the lateral force of the left steered wheel 110 so as to lower the friction circle use rate of the wheel with the highest friction circle use rate, and corrects the right steering command value and the left steering command value such that the distribution ratio matches the determined target distribution ratio. FIG. 3 is a block diagram illustrating the functional configuration of the lateral force generation unit. As illustrated in the drawing, the lateral force generation unit 146 includes a vehicle body slip angle computation unit 152, a tire slip angle computation unit 153, and a lateral force computation unit 154.

The vertical load computation unit 147 computes the vertical load on each of the front-right, front-left, rear-right, rear-left wheels based on the yaw rate which is acquired from the state amount processing unit 130, the speed of the vehicle 101, the weight of the vehicle 101, the distance from the center of gravity of the vehicle 101 to each of the four wheels, etc.

The vehicle body slip angle computation unit 152 computes the slip angle of the entire vehicle 101 based on the yaw rate which is acquired from the state amount processing unit 130, the speed of the vehicle 101, and the acceleration (in the lateral direction and the front-rear direction) of the vehicle 101.

The tire slip angle computation unit 153 calculates the tire slip angle of each of the wheels based on the vehicle body slip angle which is acquired from the vehicle body slip angle computation unit 152, the yaw rate which is acquired from the state amount processing unit 130, and the actual steered angle of each of the wheels which is acquired from the state amount processing unit 130.

The lateral force computation unit 154 calculates the tire lateral force of each of the wheels based on the vertical load on each of the wheels which is calculated by the vertical load computation unit 147 and the tire slip angle of each of the wheels which is calculated by the tire slip angle computation unit 153, and outputs the calculated tire lateral force to the steered angle distribution unit 143 and the front-rear force generation unit 149 as lateral force information.

The front-rear force generation unit 149 computes the tire front-rear force of each of the wheels based on the lateral force of each of the wheels which is generated by the lateral force generation unit 146 and by solving the equation of motion of the vehicle in the rotational direction, the equation of motion of the vehicle in the front-rear direction, the equation of motion of the vehicle in the lateral direction, the relational expression between the steered angle and the tire lateral force, and the relational expression between the steered angle and the tire front-rear force, and outputs the computed tire front-rear force to the steered angle distribution unit 143 as front-rear force information.

In the present embodiment, the turning limit of the vehicle 101 can be improved by performing feedback control on each of the steered angle of the right steered wheel 120 and the steered angle of the left steered wheel 110 such that the distribution ratio between tire lateral forces of the wheels, which are disposed on the right and left sides of the vehicle 101, matches a target distribution ratio. Specifically, the vehicle 101 is enabled to travel stably without spinning and the safety during emergency steering can be improved by the steered angle distribution unit 143 correcting each of the right steering command value and the left steering command value such that the resultant force of the tire lateral force and the tire front-rear force, which is varied in accordance with the travel state of the vehicle 101, falls within the range of the friction circle.

In addition, feedback control, in which the steering command value for determining the right and left steering command values is corrected based on the state amounts, is executed. Thus, two kinds of feedback control are executed independently. Thus, it is possible to steer the vehicle 101 along the travel path in accordance with an operation of the steering member 103, that is, it is possible to steer the vehicle 101 with a so-called on-the-rail feel, while improving the turning limit of the vehicle 101, for example.

The present invention is not limited to the embodiment described above. For example, the constituent elements described herein may be combined as desired, or some of the constituent elements may be excluded, to implement different embodiments of the present invention. In addition, the present invention also includes modifications obtained by a person skilled in the art making various conceivable changes to the embodiment described above without departing from the scope of the present invention, that is, without departing from the meaning of the language used in the claims.

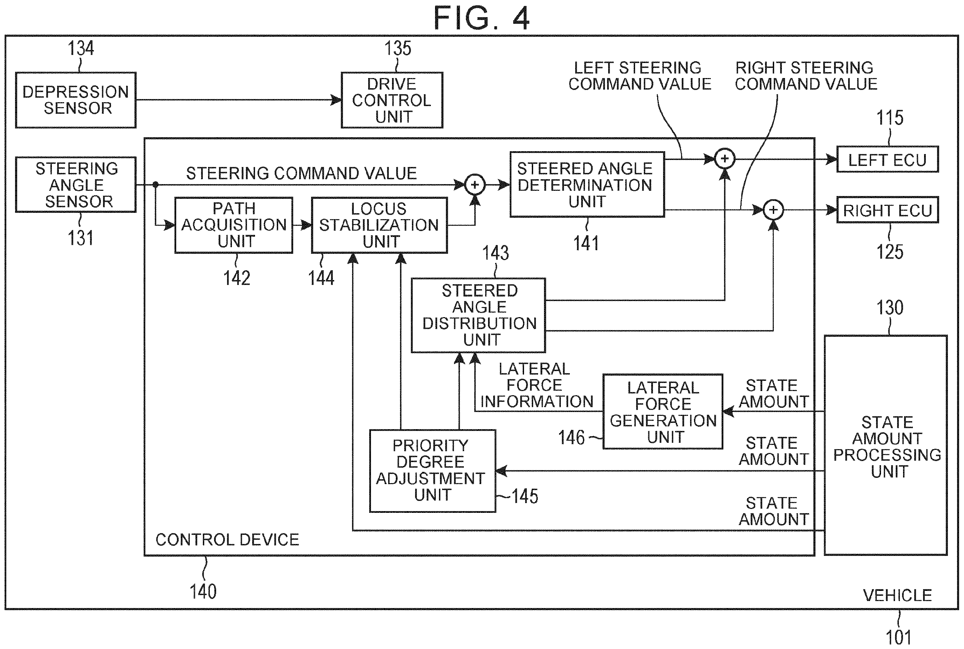

For example, as illustrated in FIG. 4, the control device 140 may include a priority degree adjustment unit 145. The priority degree adjustment unit 145 varies the control priority degree of the locus stabilization unit 144 with respect to the control priority degree of the steered angle distribution unit 143 in the case where it is determined based on at least one of a plurality of state amounts indicating the behavior of the vehicle 101 during travel that the vehicle 101 is in a predetermined state, as compared to that in the case where the vehicle 101 is not in the predetermined state. Consequently, smooth control that causes no vibration etc. can be achieved by adjusting the control priority degree of the steered angle distribution unit 143 that individually performs feedback correction of the right steering command value and the left steering command value based on the state amounts which are obtained from the state amount processing unit 130, and the control priority degree of the locus stabilization unit 144 that performs feedback correction of the steering command value for generating the right steering command value and the left steering command value based on the state amounts which are obtained from the state amount processing unit 130 as well.

The adjustment of the priority degrees by the priority degree adjustment unit 145 is performed by changing time constants for the steered angle distribution unit 143 and the locus stabilization unit 144, for example. Specifically, the priority degree adjustment unit 145 may make the time constants different from each other by adjusting at least one of the control cycle and the control gain of each of the steered angle distribution unit 143 and the locus stabilization unit 144, for example.

Specifically, the predetermined state is assumed to be a limit state of the vehicle 101. That is, when the vehicle 101 is in the limit state, the vehicle 101 is in the predetermined state. In the case where it is determined based on the yaw rate, the vehicle speed, etc. that the vehicle 101 is in the limit state, the priority degree adjustment unit 145 increases the control priority degree of the steered angle distribution unit 143 by shortening the control cycle thereof as compared to that during normal travel, and reduces the control priority degree of the locus stabilization unit 144 by extending the control cycle thereof as compared to that during normal travel. Specifically, the control cycles of the steered angle distribution unit 143 and the locus stabilization unit 144 are changed such that the ratio of the control cycle of the locus stabilization unit 144 to the control cycle of the steered angle distribution unit 143 in the limit state is the inverse of the ratio during normal travel, for example. Alternatively, the control cycle of the steered angle distribution unit 143 may be shortened as compared to that during normal travel and the control cycle of the locus stabilization unit 144 may be extended as compared to that during normal travel in a range in which the ratio of the control cycle of the locus stabilization unit 144 to the control cycle of the steered angle distribution unit 143 in the limit state does not become the inverse of the ratio during normal travel. A control gain (e.g. at least one of gains in proportional-integral-derivative (PID) control) may be adjusted, instead of the control cycle.

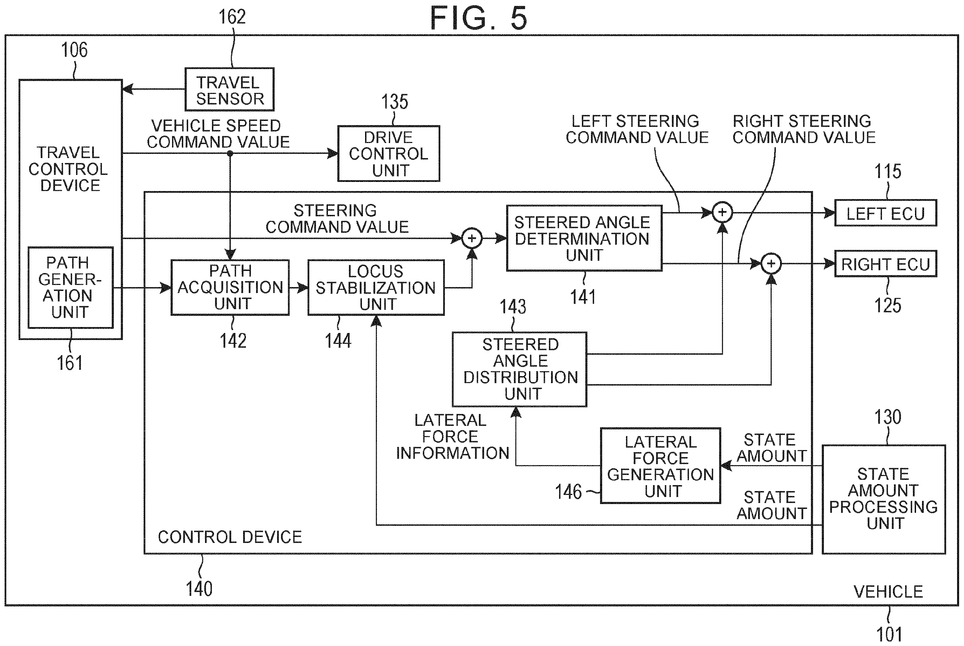

The vehicle 101 may include, for example, an assist mode in which steering of the vehicle 101 performed using the steering member 103 is assisted, an automated driving mode in which automated driving without using the steering member 103 is performed. In this case, as illustrated in FIG. 5, the vehicle 101 includes a travel sensor 162 that enables automated driving etc., and a travel control device 106 that controls or assists travel of the vehicle 101 based on information from the travel sensor 162.

The travel sensor 162 is a sensor that acquires information that is necessary for automated travel of the vehicle 101. The travel sensor 162 is not specifically limited, and may include a plurality of kinds of sensors. Examples of the travel sensor 162 include a camera that acquires information for generating a travel path such as the position of a mark such as a white line provided on the road surface, a sensor that acquires the position of the vehicle 101 in map information, a radar that detects an obstacle ahead of the vehicle, etc.

The travel control device 106 controls travel of the vehicle 101 based on, for example, information from the travel sensor 162. The travel control device 106 determines a target vehicle speed for the vehicle 101, and outputs a vehicle speed command value corresponding to the target vehicle speed to the drive control unit 135. In addition, the travel control device 106 includes a path generation unit 161. The path generation unit 161 generates a path to be followed by the vehicle 101 based on the map information or the information from the travel sensor 162, and outputs the generated path as path information. In addition, the travel control device 106 outputs a steering command value based on the current position of the vehicle 101, the path information which is generated by the path generation unit 161, and so on.

In the case of the assist mode, the automated driving mode, or the like, the steered angle determination unit 141 of the control device 140 generates a right steering command value and a left steering command value based on the steering command value which is output from the travel control device 106. The steered angle distribution unit 143 corrects the right steering command value and the left steering command value based on the state amounts, irrespective of whether the vehicle is in the assist mode, the automated driving mode, or the like. The path acquisition unit 142 adds the vehicle speed command value which is output from the travel control device 106 to the path information which is acquired from the path generation unit 161, and outputs the resulting path information. The locus stabilization unit 144 corrects the steering command value based on the acquired path information.

In FIG. 5, the priority degree adjustment unit 145 which adjusts the respective priority degrees of the locus stabilization unit 144 and the steered angle distribution unit 143 relative to each other is not provided. In this case, at least one of the locus stabilization unit 144 and the steered angle distribution unit 143 may adjust the priority degrees based on the state amounts.

The present invention may be implemented as a system, apparatus, method, integrated circuit, computer program, or storage medium such as a computer-readable storage disk, or may be implemented as any combination of two or more of the system, apparatus, method, integrated circuit, computer program, and storage medium.

For example, the processing units included in the embodiment described above may be implemented as a large scale integration (LSI) circuit which is typically an integrated circuit. Each of the units may be individually implemented on one chip, or some or all of the units may be implemented on one chip.

Circuit integration is not limited to LSI, and may be implemented by a dedicated circuit or a general-purpose processor. A field programmable gate array (FPGA) that is programmable after LSI is produced, or a reconfigurable processor that enables reconfiguration of connection or setting of circuit cells inside LSI may also be utilized.

In the embodiment described above, each constituent element may be constituted by dedicated hardware, or implemented by executing a software program that is suitable for the constituent element. Each constituent element may also be implemented by a program execution unit such as a processor such as a CPU reading and executing a software program stored in a storage medium such as a hard disk or a semiconductor memory.

In addition, some or all of the constituent elements described above may be constituted by a removable integrated circuit (IC) card or a single module. The IC card or the module is a computer system including a microprocessor, a ROM, a RAM, etc. The IC card or the module may include the LSI described above or a system LSI circuit. The IC card or the module achieves its function when the microprocessor operates in accordance with a computer program. The IC card and the module may be tamper-resistant.

The present invention is useful for steering devices including independent mechanisms that steer respective steered wheels.

**Claims**

1. A control device configured to independently control respective steered angles of a right steered wheel (120) and a left steered wheel (110) disposed on right and left sides with respect to an advancing direction of a vehicle, the control device **characterized by** comprising
an electronic control unit (140) configured to

   i) determine a right steering command value that indicates the steered angle of the right steered wheel (120), and a left steering command value that indicates the steered angle of the left steered wheel (110), based on a steering command value that indicates a steering direction of the vehicle,
   ii) acquire path information that indicates a target path for the vehicle,
   iii) correct the steering command value based on at least one of a plurality of state amounts indicating a behavior of the vehicle during travel such that the vehicle travels along the target path, and
   iv) correct each of the right steering command value and the left steering command value based on lateral force information that indicates a tire lateral force of at least one of a plurality of wheels including the right steered wheel (120) and the left steered wheel (110) such that a distribution ratio between a tire lateral force of the right steered wheel (120) and a tire lateral force of the left steered wheel (110) matches a target distribution ratio.

2. The control device according to claim 1, **characterized in that** the electronic control unit (140) is configured to determine the target distribution ratio such that a friction circle use rate is less than one.

3. The control device according to claim 1, **characterized in that** the electronic control unit (140) is configured to determine the target distribution ratio within a predetermined range including the distribution ratio at which a value of (a tire front-rear force)^2 + (a tire lateral force)^2 with regard to any one of the wheels is a local minimum, a symbol of ^ representing exponentiation.

4. The control device according to any one of claims 1 to 3, **characterized in that** in the target distribution ratio during a turn of the vehicle, a lateral force allocated to an outer wheel side is larger than a lateral force allocated to an inner wheel side.

5. A steering device **characterized by** comprising:

   the control device according to any one of claims 1 to 4;
   a left steering operation mechanism (111) including a left actuator (112) that steers the left steered wheel (110); and
   a right steering operation mechanism (121) including a right actuator (122) that steers the right steered wheel (120).

# FIG. 1

100

105

**STORAGE DEVICE**

103

131

130

**VEHICLE SPEED SENSOR** — 132

**STATE AMOUNT PROCESSING UNIT**

**CONTROL DEVICE**

**INERTIA MEASUREMENT DEVICE** — 133

140

122

**RIGHT ECU**

**LEFT ECU**

112

124
123

125

115

114
113

121

111

120

110

# FIG. 2

# FIG. 3

# FIG. 4

# FIG. 5

FIG. 5

Europäisches
Patentamt

European
Patent Office

Office européen
des brevets

## EUROPEAN SEARCH REPORT

Application Number

EP 20 19 0920

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 013788 A1 (TOYOTA MOTOR CO LTD [JP]; AISIN SEIKI [JP]; JTEKT CORP [JP]) 28 September 2006 (2006-09-28) | 1,2,4,5 | INV. B62D6/00 B62D15/02 |
| Y | * paragraphs [0004] - [0006], [0020] - [0025], [0027], [0028], [0044], [0045], [0048] - [0051], [0055] - [0067]; claims 1-8; figures 1-5 * | 1,3 | |
| Y | EP 3 309 044 A1 (JTEKT CORP [JP]) 18 April 2018 (2018-04-18) | 1,3 | |
| A | * paragraphs [0015] - [0020], [0026] - [0028]; claims 1-3; figures 1-4 * | 2,4,5 | |
| A | EP 3 305 625 A1 (JTEKT CORP [JP]) 11 April 2018 (2018-04-11) * paragraphs [0057] - [0059]; figures 1-5 * | 1-5 | |

TECHNICAL FIELDS
SEARCHED      (IPC)

B62D

The present search report has been drawn up for all claims

| Place of search | Date of completion of the search | Examiner |
|---|---|---|
| The Hague | 21 December 2020 | Janusch, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 0920

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2020

| Patent document cited in search report | Publication date | Patent family member(s) | Publication date |
|---|---|---|---|
| DE 102006013788 A1 | 28-09-2006 | CN 1836947 A<br>DE 102006013788 A1<br>JP 4445889 B2<br>JP 2006264561 A<br>US 2006217867 A1 | 27-09-2006<br>28-09-2006<br>07-04-2010<br>05-10-2006<br>28-09-2006 |
| EP 3309044 A1 | 18-04-2018 | CN 107914767 A<br>EP 3309044 A1<br>JP 6751511 B2<br>JP 2018062209 A<br>US 2018099692 A1 | 17-04-2018<br>18-04-2018<br>09-09-2020<br>19-04-2018<br>12-04-2018 |
| EP 3305625 A1 | 11-04-2018 | CN 107914765 A<br>EP 3305625 A1<br>JP 6799778 B2<br>JP 2018058512 A<br>US 2018099690 A1 | 17-04-2018<br>11-04-2018<br>16-12-2020<br>12-04-2018<br>12-04-2018 |

EPO FORM P0459

For more details about this annex : see Official Journal of the European Patent Office, No. 12/82

**EP 3 782 877 A1**

**Patent documents cited in the description**

- JP 2009208492 A

- JP 2009234306 A